# FASCICULE DE BREVET EUROPEEN

(11) **EP 0 435 754 B1**
(45) Date de publication et mention de la délivrance du brevet: **15.06.1994**
(21) Numéro de dépôt: 90403701.7
(22) Date de dépôt: 20.12.1990
(51) Int. Cl.: H04L 1/00, G11B 20/18, G11B 20/12

(54) **Procédé de liaison de données lors de l'enregistrement de données codées sur un disque optique du type enregistrable**
Verfahren zur Verbindung von codierten Daten vor der Aufzeichnung auf einer beschreibbaren optischen Platte
Method of linking coded data to be recorded on a writable optical disc

(30) Priorité: 29.12.1989 FR 8917433
(43) Date de publication de la demande: 03.07.1991
(73) Titulaire: LABORATOIRE EUROPEEN DE RECHERCHES ELECTRONIQUES AVANCEES, SOCIETE EN NOM COLLECTIF, 92400 Courbevoie (FR)
(72) Inventeur: Fujita, Mutsumi, F-92402 Courbevoie Cédex (FR)
(74) Mandataire: Ruellan-Lemonnier, Brigitte

(56) Documents cités:
- EP-A- 0 144 813
- EP-A- 0 286 412
- EP-A- 0 310 089
- EP-A- 0 342 833
- FR-A- 2 581 470

## Description

La présente invention concerne un procédé de liaison des données lors de l'enregistrement de données codées sur un disque optique du type enregistrable, plus particulièrement lors de l'enregistrement de données codées selon un codage spécifique utilisant de plus un système de correction d'erreurs de type CIRC.

Dans les disques optiques, plus particulièrement dans les compacts disques, à savoir les compacts disques audio (CD-audio) ou les compacts disques-ROM (CD-ROM avec ROM signifiant Read Only Memory en langue anglaise), les données destinées à être enregistrées sur le disque sont codées en utilisant un code de modulation spécifique notamment le code de modulation EFM (pour Eight to Fourteen Modulation Code) bien connu de l'homme de l'art. De plus, pour corriger les erreurs se produisant sur le disque, on associe au code de modulation EFM un code de correction d'erreurs qui, dans ce cas, est le code CIRC pour Cross Interleave Reed-Solomon Code en langue anglaise. Ce code de correction d'erreurs permet de corriger la plupart des erreurs qui se produisent sur le disque en réalisant un entrelacement des données. Du fait de l'utilisation de ces différents codes ainsi que de la nécessité d'ajouter certains bits de parité ou de contrôle, les données représentées originalement par un certain nombre de bits sont enregistrées sur le disque avec un nombre de bits beaucoup plus important. D'autre part, à cause de l'entrelacement, l'on ne connait pas exactement la position des derniers bits, car les bits ne sont pas enregistrés séquentiellement.

De plus, selon les normes compact-disques actuelles, pour pouvoir synchroniser facilement les données enregistrées sur le disque (comme décrit dans EP-A-0 310 089 et EP-A-0 342 833, celles-ci sont divisées en trames, les trames étant regroupées en blocs de p trames. Dans le standard CD-ROM ou CD-audio, chaque trame est constituée de 24 octets et 1 octet de sous-codes et chaque bloc de 98 trames ou 2352 octets. L'ensemble des sous-codes de 98 trames constitue une trame de sous-codes. D'autre part, l'entrelacement dû au code de correction d'erreurs utilisé nécessite au maximum 108 trames. L'entrelacement ne pose pas de problème dans le cas d'un format CD-ROM ou CD-audio; car alors les données sont enregistrées une seule fois par le fabricant lui-même. Toutefois, il se pose un problème de liaison des données lorsque l'on veut utiliser le même type de code de correction d'erreurs dans le cas d'un disque optique du type enregistrable, à savoir un disque réinscriptible ou "Write once". Dans ce cas, en effet, des données doivent pouvoir être écrites au moins une fois par un utilisateur. Il se pose donc un problème de liaison des données. Or, l'entrelacement dû au code de correction d'erreurs ne facilite pas la liaison des donnée. Il nécessite d'avoir un nombre de blocs redondants relativement important de manière à être sûr d'enregistrer sur ce disque toutes les données. D'autre part, il augmente le temps d'accès.

La présente invention a donc pour but de proposer un procédé de liaison des données lors de l'enregistrement sur un disque optique du type enregistrable, de données codées selon un codage spécifique utilisant un système de correction d'erreurs CIRC qui permettent de limiter le nombre de blocs redondants nécessaire à l'enregistrement pour chaque groupe de données.

En conséquence, la présente invention a pour objet un procédé de liaison des données lors de l'enregistrement sur un disque optique du type enregistrable, de données codées selon un codage spécifique utilisant un système de correction d'erreurs de type CIRC dans lequel les données sont organisées en trames, en blocs de p trames et en groupes de n blocs, les trames de données et les trames de sous-codes étant synchronisées en utilisant des informations préenregistrées sur le disque, caractérisé en ce que, lors du codage, chaque groupe de n blocs est précédé de trois blocs redondants, à savoir un bloc d'entrée lui-même précédé d'un premier et d'un second blocs factices et est suivi de deux blocs redondants, à savoir un bloc de sortie lui-même suivi d'un troisième bloc factice tandis que lors de l'écriture sur le disque, la longueur de trois blocs redondants est suffisante.

Ainsi, sur le disque, on écrit une longueur de blocs moins importante que le nombre de blocs nécessaire lors du codage. Ceci entraîne une redondance moindre et permet d'avoir des groupes de n blocs plus petit ce qui améliore le temps d'accès.

Selon une autre caractéristique de la présente invention, l'écriture sur le disque est initialisée par une position de liaison déterminée à l'aide d'une information de synchronisation de sous-codage, elle-même synchronisée avec l'information de synchronisation pré-enregistrée. De préférence, cette position de liaison est obtenue à deux trames codées près.

Selon un mode de réalisation particulier, la position de liaison est calculée pour se trouver à une position comprise entre 11 et 98 trames codées après le début de l'information de synchronisation de sous-codage, de préférence à 55 trames codées de l'information de synchronisation. Ce calcul pour la position de liaison provient du fait que l'entrelacement maximal est de 108 trames. Ceci signifie que les données peuvent s'étendre sur 10 trames du bloc suivant (108-98 = 10) lorsque l'on a l'entrelacement maximal. La position de liaison doit être entre la trame suivante (11è) et la dernière trame du bloc (98è). De plus, la position préférentielle donnée par la 55è trame correspond à la position milieu. Cette position milieu est la meilleure position pour obtenir une tolérance maximale pour la synchronisation.

Cette détermination de la position de liaison permet en particulier d'obtenir une redondance de seulement trois blocs.

Selon encore une autre caractéristique de la présente invention, la période d'écriture démarre dans la trame de sous-codage correspondant au second bloc factice et s'arrête dans la trame de sous-codage correspondant au troisième bloc factice.

D'autres caractéristiques et avantages de la présente invention apparaîtront à la lecture de la description faite ci-après d'un mode de réalisation préférentiel avec référence au dessin ci-annexé dans lequel :
- la figure 1 est un schéma de principe expliquant le procédé de liaison des données conforme à la présente invention, et
- la figure 2 est un diagramme expliquant la règle de liaison.

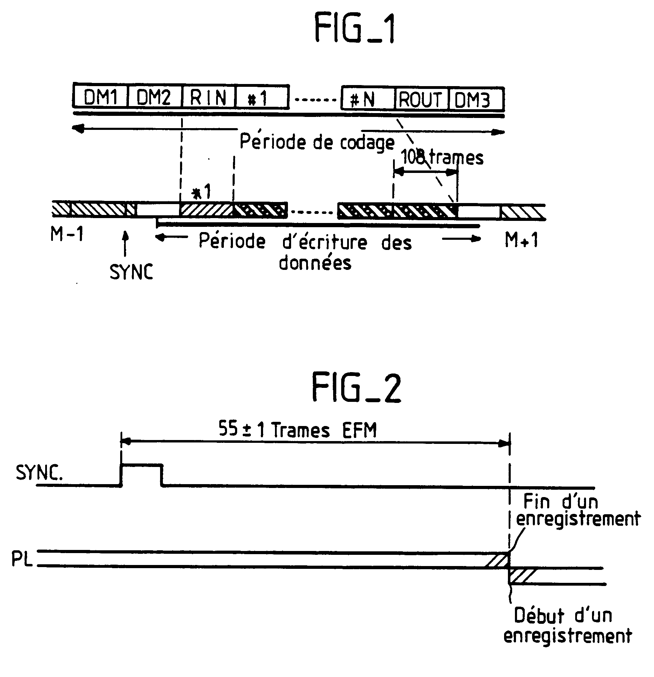

La représentation de la figure 1 est basée sur l'utilisation d'un codeur CIRC/EFM idéal qui n'apporte aucun retard excepté le retard dû au code de correction d'erreurs de type CIRC. Comme représenté par la partie mentionnée période de codage, la sortie provenant du codeur est donc composée des blocs suivants, à savoir un premier bloc factice référencé DM1, un second bloc factice référencé DM2, un bloc d'entrée référencé RIN, N bloc-utilisateur référencé 1... N, un bloc de sortie référencé R-OUT et un troisième bloc factice référencé DM3.

Les données dans les différents blocs ont été codées selon le standard CD-ROM. Chaque bloc comporte donc au moins des informations de synchronisation, une entête comportant au moins des informations sur le mode utilisé et des informations sur le bloc, l'entête étant suivie par au moins un champ de données. Suivant le type de mode utilisé, le format bloc comportera d'autres informations telles que des bits de parité ou une sous-entête.

Dans le cadre de la présente invention, les deux blocs factices DM1 et DM2 sont utilisés uniquement pour remplir le début du flot des données EFM. Dans ce cas, le champ des données de ces blocs peut contenir tous types de données à l'exception de données présentant le même schéma que les informations de synchronisation de blocs.

Le bloc d'entrée RIN est utilisé pour réaliser une protection de la synchronisation bloc. De manière plus particulière, les informations de synchronisation de bloc du bloc entrée RIN sont utilisées, lors de la lecture, pour obtenir la synchronisation du premier bloc-utilisateur de données. Ainsi, dans le cas où soit les informations de synchronisation du bloc d'entrée RIN ou soit les informations de synchronisation du premier bloc de données manquent suite à un défaut sur le disque ou à une erreur de lecture, la synchronisation peut malgré tout être réalisée au début du premier bloc de données. Le champ des données enregistré dans le bloc d'entrée RIN peut contenir tous types de données à l'exception de données présentant le même schéma que les informations de synchronisation de bloc. Le bloc redondant appelé bloc de sortie R-OUT est utilisé pour l'entrelacement de la dernière partie des blocs de données. Les informations de synchronisation de bloc et d'entête doivent être valides. Le champ des données du bloc de sortie ROUT peut contenir tous types de données à l'exception de données présentant le même schéma que les informations de synchronisation de bloc. De même, le troisième bloc factice est utilisé à cause de l'entrelacement du dernier bloc de données et pour permettre au décodeur CIRC/EFM de traiter la dernière partie des données.

D'autre part, conformément à la présente invention, on a choisi la position de liaison référencée PL sur la figure 2 de telle sorte que cette position se trouve entre 11 et 98 trames EFM ou trames codées après l'information de synchronisation de sous-codage référencée 5 sur la figure 2. La position de liaison comme représentée sur la figure 2, est l'endroit physique sur le disque où l'enregistrement des signaux codés peut commencer et s'arrêter. La position de liaison choisie dans le cadre de la présente invention se trouve 55 ± 1 trames codées ou trames EFM après le début de l'information de synchronisation de sous-codage SYNC, comme représenté sur la figure 2. De ce fait, une surécriture ou un intervalle d'au plus 2 trames EFM peut se produire.

En utilisant les règles de liaison mentionnées ci-dessus, on voit que la période d'écriture des données peut commencer durant la période du second bloc factice DM2 comme symbolisé par la référence D sur la figure 1. D se trouve 55 + 1 trames EFM après la détection du début de l'information de synchronisation de sous-codage SYNC. L'information SYNC a été détectée au plus une trame avant la fin de l'écriture du M-1^{e} groupe dans le mode de réalisation représenté.

Ensuite, l'enregistrement des données qui inclut l'enregistrement du bloc RIN et des blocs de données utilisateurs 1 à N se continue jusqu'à environ 55 trames codées après la détection de l'information de synchronisation bloc du troisième bloc factice DM3 comme représenté sur la figure 1. En utilisant le procédé décrit ci-dessus, on s'aperçoit que l'écriture commence à un bloc plus (98-55) trames EFM avant le premier bloc des données et se termine un bloc plus 55 trames EFM après le dernier bloc des données. En conséquence, la longueur supplémentaire permettant d'enregistrer l'entrelacement est constituée de deux blocs plus 98 trames EFM à savoir trois blocs redondants. Ainsi, en choisissant correctement la position de liaison par rapport à l'information de synchronisation de sous-codage ainsi que le codage des blocs, il est possible de limiter le nombre de blocs redondants.

D'autre part, la reconnaissance des différents types de blocs est obtenue en utilisant le mot concernant le mode dans l'entête des blocs. Ce mot comporte 8 bits qui sont alors distribuées de la manière suivante :
- les bits 7 et 6 donnent une indication sur le type de bloc à savoir, par exemple :
   - 0 = 00 : bloc des données utilisateurs ;
   - 1 = 0 1 : bloc d'entrée ;
   - 2 = 1 0 : bloc de sortie :
   - 3 = 1 1 : bloc factice.

ces bits 5 et 2 sont des bits réservés tandis que les bits 1 et 0 concernent le mode utilisé pour le format bloc conformément aux modes utilisés dans la norme CD-ROM.

## Revendications

1. Procédé de liaison des données pour l'enregistrement, sur un disque optique du type enregistrable de données codées selon un codage spécifique utilisant un système de correction d'erreurs de type CIRC dans lequel les données sont organisées en trames, en blocs de p trames et en groupes de n blocs, les trames de données et les trames de sous-codes étant synchronisées en utilisant des informations pré-enregistrées sur le disque, caractérisé en ce que, lors du codage, chaque groupe de n blocs est précédé de trois blocs redondants (DM1, DM2, RIN), à savoir un bloc d'entrée (RIN) lui-même précédé d'un premier et d'un second blocs factices (DM1, DM2) et est suivi de deux blocs redondants (ROUT, DM3), à savoir un bloc de sortie (ROUT) lui-même suivi d'un troisième bloc factice (DM3) tandis que lors de l'écriture sur le disque, la longueur de trois blocs redondants (RIN, ROUT, DM3) est suffisante.

2. Procédé selon la revendication 1, caractérisé en ce que chaque bloc comporte au moins des informations de synchronisation, une entête comportant au moins des informations de bloc et des informations de mode et un champs de données.

3. Procédé selon l'une quelconque des revendications 1 et 2, caractérisé en ce que les informations de mode sont codées en un mot de 8 bits avec 2 bits indiquant le type de bloc.

4. Procédé selon l'une quelconque des revendications 1 à 3, caractérisé en ce que l'écriture sur le disque est initialisée par une position de liaison déterminée à l'aide d'une information de synchronisation de sous-codage, elle-même synchronisée avec l'information de synchronisation pré-enregistrée.

5. Procédé selon la revendication 4, caractérisé en ce que la position de liaison est obtenue à deux trames codées près.

6. Procédé selon l'une quelconque des revendications 4 et 5, caractérisé en ce que la position de liaison est calculée pour se trouver en une position comprise entre 11 et 98 trames codées après l'information de synchronisation de sous-codage.

7. Procédé selon la revendication 6, caractérisé en ce que la position de liaison se trouve à 55 trames codées de l'information de synchronisation.

8. Procédé selon l'une quelconque des revendications 1 à 7, caractérisé en ce que la période d'écriture démarre dans la trame de sous-codage correspondant au second bloc factice et s'arrête dans la trame de sous-codage correspondant au troisième bloc factice.

## Patentansprüche

1. Verfahren zur Datenverbindung beim Beschreiben einer optischen Scheibe mit gemäß einer speziellen ein Fehlerkorrektursystem vom Typ CIRC verwendenden Kodierung kodierten Daten, die in Rahmen, in Blöcken von p Rahmen und in Gruppen n Blökken gegliedert sind, wobei die Datenrahmen sowie die Unterkodierahmen unter Verwendung von vorab auf der Scheibe gespeicherten Informationen synchronisiert werden, dadurch gekennzeichnet, daß bei der Kodierung vor jeder Gruppe von n Blöcken drei redundante Blöcke (DM1, DM2, RIN) angeordnet werden, nämlich ein Eingangsblock (RIN), vor dem ein erster und ein zweiter Scheinblock (DM1, DM2) liegen, und daß nach jeder Gruppe von n Blöcken zwei redundante Blöcke (ROUT, DM3) folgen, nämlich ein Ausgangsblock (ROUT) und danach ein dritter Scheinblock (DM3), während beim Beschreiben der Scheibe die Länge von drei redundanten Blöcken (RIN, ROUT, DM3) ausreicht.

2. Verfahren nach Anspruch 1, dadurch gekennzeichnet, daß jeder Block mindestens Synchronisationsinformationen, einen Vorspann, der mindestens Blockinformationen und Modusinformationen enthält, und ein Datenfeld aufweist.

3. Verfahren nach einem beliebigen der Ansprüche 1 und 2, dadurch gekennzeichnet, daß die Modusinformationen in ein Wort von 8 Bits verschlüsselt sind, von denen zwei Bits den Typ des Blocks bezeichnen.

4. Verfahren nach einem beliebigen der Ansprüche 1 bis 3, dadurch gekennzeichnet, daß das Einspeichern auf der Scheibe durch eine mit Hilfe einer Unterkodierungssynchronisationsinformation bestimmte Verbindungsposition initialisiert wird, wobei diese Position ihrerseits mit der vorab eingespeicherten Synchronisationsinformation synchronisiert wird.

5. Verfahren nach Anspruch 4, dadurch gekennzeichnet, daß die Verbindungsposition bis auf zwei kodierte Rahmen genau erhalten wird.

6. Verfahren nach einem beliebigen der Ansprüche 4 und 5, dadurch gekennzeichnet, daß die Verbindungsposition so berechnet wird, daß sie sich bei einer Position zwischen 11 und 98 kodierten Rahmen nach der Unterkodiersynchronisationsinformation befindet.

7. Verfahren nach Anspruch 6, dadurch gekennzeichnet, daß die Verbindungsposition sich 55 kodierte Rahmen nach der Synchronisationsinformation befindet.

8. Verfahren nach einem beliebigen der Ansprüche 1 bis 7, dadurch gekennzeichnet, daß die Schreibperiode im Unterkodierrahmen entsprechend dem zweiten Scheinrahmen beginnt und im Unterkodierrahmen entsprechend dem dritten Scheinrahmen endet.

## Claims

1. Method of linking data for recording of coded data, on an optical disc of the recordable type, according to a specific coding using an error correction system of the CIRC type, in which the data are organized into frames, into blocks of p frames and into groups of n blocks, the frames of data and the frames of subcodes being synchronized by using information prerecorded on the disc, characterized in that, upon coding, each group of n blocks is preceded by three redundant blocks (DM1, DM2, RIN), namely one entry block (RIN), itself preceded by a first and by a second dummy block (DM1, DM2) and is followed by two redundant blocks (ROUT, DM3), namely one output block (ROUT), itself followed by a third dummy block (DM3), while, upon writing to the disc, the length of three redundant blocks (RIN, ROUT, DM3) is sufficient.

2. Method according to Claim 1, characterized in that each block includes at least synchronization information, a header including at least block information and mode information and a data field.

3. Method according to either of Claims 1 or 2, characterized in that the mode information is coded into an 8-bit word with 2 bits indicating the block type.

4. Method according to any one of Claims 1 to 3, characterized in that writing to the disc is initialized by a linking position determined with the aid of subcoding synchronization information, which is itself synchronized with the prerecorded synchronization information.

5. Method according to Claim 4, characterized in that the linking position is obtained to within two coded frames.

6. Method according to either of Claims 4 or 5, characterized in that the linking position is calculated so as to be in a position lying between 11 and 98 coded frames after the subcoding synchronization information.

7. Method according to Claim 6, characterized in that the linking position is at 55 coded frames from the synchronization information.

8. Method according to any one of Claims 1 to 7, characterized in that the writing period starts in the subcoding frame corresponding to the second dummy block and stops in the subcoding frame corresponding to the third dummy block.
